# EUROPEAN PATENT SPECIFICATION

(11) **EP 4 632 699 B1**
(45) Date of publication and mention of the grant of the patent: **05.08.2026**
(21) Application number: 24169555.0
(22) Date of filing: 10.04.2024
(51) Int. Cl.: G06V 40/16

(54) **SYSTEM AND METHOD FOR GENERATING VISUAL RESPONSE TO SPOKEN INPUT**
SYSTEM UND VERFAHREN ZUR ERZEUGUNG EINER VISUELLEN ANTWORT AUF EINE GESPROCHENE EINGABE
SYSTÈME ET PROCÉDÉ POUR GÉNÉRER UNE RÉPONSE VISUELLE À UNE ENTRÉE VOCALE

(43) Date of publication of application: 15.10.2025
(73) Proprietor: Aptiv Technologies AG, 8200 Schaffhausen (CH)
(72) Inventor: BEYTORUN, Abdulkadir, 8200 Schaffhausen (CH); YU, Ting-Chieh, 8200 Schaffhausen (CH); STILLGER, Felix, 8200 Schaffhausen (CH)
(74) Representative: Lewis Silkin LLP

(56) References cited:
- US-A1- 2019 066 681
- US-A1- 2021 065 712
- US-A1- 2023 031 536
- NAZARIEH FATEMEH ET AL: "A Survey of Cross-Modal Visual Content Generation", IEEE TRANSACTIONS ON CIRCUITS AND SYSTEMS FOR VIDEO TECHNOLOGY, IEEE, USA, vol. 34, no. 8, 8 January 2024 (2024-01-08), pages 6814 - 6832, XP011979020, ISSN: 1051-8215, [retrieved on 20240109], DOI: 10.1109/TCSVT.2024.3351601

## Description

### Field

The present disclosure relates to providing visual information to assist a user in response a spoken input. Particularly, but not exclusively, the present disclosure concerns an interactive driver assistance system and method which generates one or more images to assist a user in response to a spoken command.

### Background

Voice-controlled systems are widely used to enable instruction of tasks without the user needing to interact physically with a device to enable such instruction. Such systems are particularly useful in automotive contexts, where a driver may wish to perform a function such as changing a radio station, or turning on the air conditioning, but should not be distracted from control of the vehicle by navigating through menu screens on a display or searching for the appropriate control on a console.

Voice-controlled systems are effective, provided the user's intent can be properly captured by a microphone. If there is background noise or music, the system may become unreliable, either failing to identify any instruction from the user, or incorrectly identifying an instruction and causing action to be taken which is against the wishes of the user.

Mechanisms have been developed which aim to make voice-controlled systems more robust to background noise, which are based on capturing alternative information to the audio captured by a microphone. Examples of such alternative information include image-based mouth detection or context analysis, such that a spoken query or command can be detected more reliably, given the pattern of mouth movements associated with the speech. A gesture, body pose or activity which is associated with the user at the point at which the spoken query or command was given may also be analysed.

In an automotive context, such systems may be used to cause execution of one or more of a predetermined set of vehicle functions based on interpretation of a user's command, such as placing a call, changing navigation information, and changing vehicle settings. However, if errors in the interpretation of the user's query remain, an unintended action may be taken without the user's consent. Reference is made to US 2021 /065712 A1, which presents automotive visual speech recognition. Further reference is made to US 2023/031536 A1, which presents correcting lip-reading predictions. Further reference is made to US NAZARIEH FATEMEH ET AL: "A Survey of Cross-Modal Visual Content Generation", which presents a survey of cross-modal visual content generation. Further reference is made to US 2019/066681 A1, which presents a spoken command interface.

In embodiments set out in the present disclosure, an interactive element is added to a system which provides a visual indication responsive to a spoken command, through which a user is able to confirm whether a particular action should be taken. In order to facilitate the basis on which the user should provide such confirmation, images are generated from which the user can understand how a voice input has been interpreted, and which action is suggested to be taken. The images are generated using a text-to-image model, acting on the basis of text identified from a lip detection process applied to images of the user when speaking.

### Summary

According to a first aspect, there is provided a system for instructing execution of a function in response a spoken input, comprising one or more cameras for capturing images of the user, a lip detection module for processing the captured images to determine one or more words corresponding to lip movements of the user's spoken input, a text-to-image module for generating one or more images representing a function responsive to the spoken input, based on the one or more words determined by the lip detection module, and an output module for outputting the one or more generated images for display, wherein the one or more cameras are arranged to capture the user's response to the displayed one or more images, and the system is arranged to instruct execution of a function in dependence upon the captured response.

In this way, it is possible to display informational images to be provided to a user in response to a particular voice input. The images may represent a suggested action to be taken in response to a command, or a response to a particular query. In noisy environments, or scenarios in which it is difficult for a user to interact with a device or smartphone, analysis of lip movements in order to determine the input to the text-to-image module is particularly advantageous, as it preserves the benefits of voice recognition systems, in terms of contactless system interaction, while reducing incorrect detection.

In embodiments, the lip-detection module is arranged to determine a context of the user's spoken input, and the text-to-image module is arranged to output the one or more generated images to a peripheral device for display in dependence upon the determined context. For example, if the lip-detection module perceives the user to be in a danger scenario, images may be displayed on the user's digital watch instead of a main display, to ensure the user is alerted as quickly as possible.

In embodiments, the lip-detection module is arranged to process the captured images to identify a face frame for each of one or more faces in the captured images, process each face frame to identify facial landmarks, process the facial landmarks to identify lip movements, and use a large language model to identify one or more words associated with the identified lip movements.

In this way, the lip-detection module is able to track lip movements of a plurality of users simultaneously. In an automotive context, for example, this enables voice inputs from the driver or any number of passengers to be processed. In addition, it is possible to derive semantic context of a particular spoken input.

In embodiments, the one or more cameras are arranged to detect at least one of body movements, body positions and lip movements to determine the response

In this manner, it is possible for the user to interact intuitively with the system, minimizing distraction from other tasks. The different embodiments of the invention are provided in the appended claims.

In embodiments, the text-to-image module is arranged to be trained by the user's response. For example, if the text-to-image module generates an image suggested an action that is not desired, the text-to-image module can be trained such that the same response is not output in the future following the same spoken input.

In embodiments, the text-to-image module comprises a diffusion model comprising a text encoder for encoding text into a text embedding, an image information creator for creating an information array in latent space, and an image decoder for generating a pixel image from the information array output by the image information creator, wherein the image information creator comprises a noise predictor arranged to predict noise in a noisy latent image, the image information creator arranged to subtract the predicted noise from the noisy latent image to generate a denoised latent image, wherein the information array in latent space is created by applying a predetermined plurality of denoising steps to an input latent image comprising noise, a noise amount, and the text embedding of one or more words output by the lip detection module.

Such text-to-image generation provides an effective technique for rendering an informative, detailed image to a user according to text obtained from lip detection. For example, the image can contain rich functional information such as an image of a vehicle component to be adjusted and an explanation of the adjustment to be performed, in response to a corresponding spoken command. In this manner, the possibility of the user missing the system's response to the original command due to, for example, background noise, is reduced as the response is delivered in visual form, and the user's understanding of the action to be taken is enhanced. By using the diffusion model, it is not necessary to restrict the information provided to the user to a set of prestored images.

In embodiments, the diffusion model further comprises an image encoder for generating an image embedding from an input image, wherein the text encoder and image encoder are trained using pairs of training images and training captions to produce pairings of embeddings.

In embodiments, the noise predictor is trained by adding predetermined noise to a training image to form a noisy training image, inputting the noisy training image to the noise predictor, using the noise predictor to predict the noise in the noisy training image, comparing the predicted noise with the predetermined noise, and training the noise predictor using backpropagation of the difference between the predicted noise and predetermined noise.

In embodiments, the system comprises an autoencoder having an encoder for compressing an image from pixel space into latent space, and a decoder for decoding an image from latent space into pixel space, wherein the image decoder comprises the decoder of the autoencoder, and wherein the encoder of the autoencoder generates training image data in latent space for training the noise predictor.

In this way, the diffusion model can operate in latent space, which is dimensionally compressed with respect to image space, which enables the text-to-image system to be trained and used more efficiently.

According to a second aspect, there is provided an automotive system comprising one or more vehicle control units, and the system described above, wherein the system is arranged to provide driver assistance, and the one or more cameras are arranged to capture images of the cabin of the vehicle.

According to a third aspect, there is provided a method of instructing execution of a function in response a spoken input, comprising capturing, by one or more cameras, images of the user, processing, by a lip detection module, the captured images to determine one or more words corresponding to lip movements of the user's spoken input, generating one or more images representing a function responsive to the spoken input, based on the determined one or more words, and displaying the one or more generated images, capturing the user's response to the displayed one or more images, and instructing execution of the function in dependence upon the captured response.

According to a fourth aspect, there is provided a computer program containing computer-executable instructions which, when executed by one or more processors of a system further comprising one or more cameras, is arranged to cause the above method to be performed.

In the embodiments disclosed, a generative model is applied to render an informative image to a user according to a situation determined from lip reading analysis. Lip reading analysis enables semantic context to be determined. In automotive contexts, functional information can be delivered to a driver, not only for safety but also for daily driving aids. The driver can instruct or verify the information from the generated images that the system perceives and shows. The use of a generative text-to-image module, enables improvement of cognitive knowledge and understanding of the user, and facilitates communication between the system and the user.

### Brief Description of Drawings

Illustrative embodiments will now be described with reference to the drawings in which:
Figure 1 shows a system for providing information to assist a user in response a spoken input, according to a first embodiment;
Figure 2 shows a system for providing information to assist a user in response a spoken input, according to a second embodiment;
Figure 3 shows the structure of a lip detection module of the system of Figure 1 or Figure 2;
Figure 4 shows the structure of an image information creator of the system of Figure 1 of Figure 2; and
Figure 5 shows a method of providing information to assist a user in response to a spoken input, according to a third embodiment.

### Detailed Description

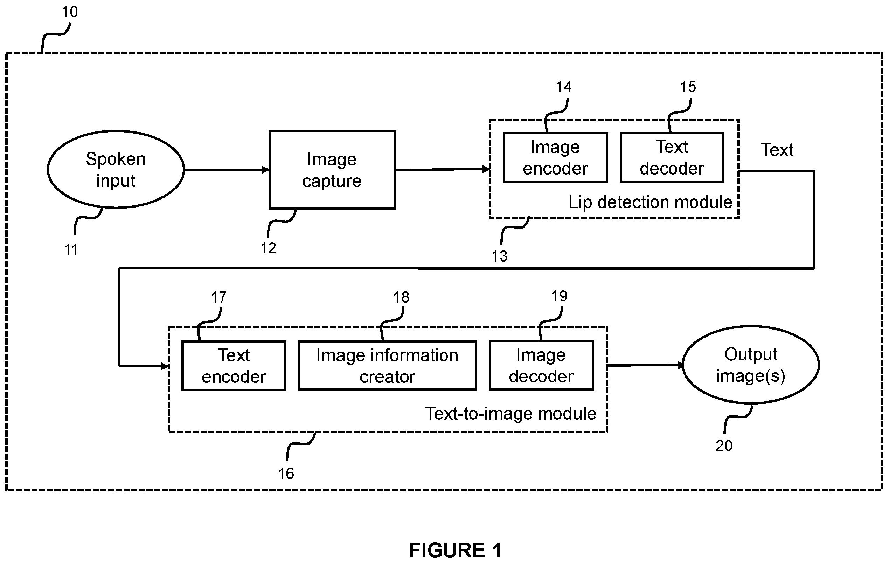

Figure 1 shows a system 10 for providing information to assist a user in response a spoken input 11, according to a first embodiment. The output of the system 10 is one or more images 20 which are generated by a text-to-image module 16.

In the present disclosure, the first embodiment is described in an automotive context, in which the system 10 is arranged to receive a spoken command 11 from a driver or one or more passengers, and is arranged to display one or more output images 20 on a display, such as a dashboard, vehicle control panel or infotainment display screen. It will of course be appreciated that the first embodiment is readily implemented in any context in which spoken input is translated into one or more output images to assist a user with a particular function associated with the spoken input.

In the first embodiment, an image capture module 12 captures the interior of the vehicle using one or more cameras such as RGB-IR cameras, having pixels for capturing visible red (R), green (G) and blue (B) information, and infra-red (IR) information. The image capture module 12 captures the interior of the vehicle continuously. In modifications of the first embodiment, the image capture module 12 is activated in response to a particular keyword captured by a microphone, or a command button, and is operational until the user has performed a particular action which completes interaction with the system.

The lip detection module 13 acts to capture regions of interest of the interior of the vehicle which contain faces of people. Any suitable face detection algorithm may be employed, and having identified regions of interest, face frames are generated. The face frames are cropped image frames of the interior of the vehicle, from which redundant information, which does not contain a user's face, is removed, so that is not processed unnecessarily.

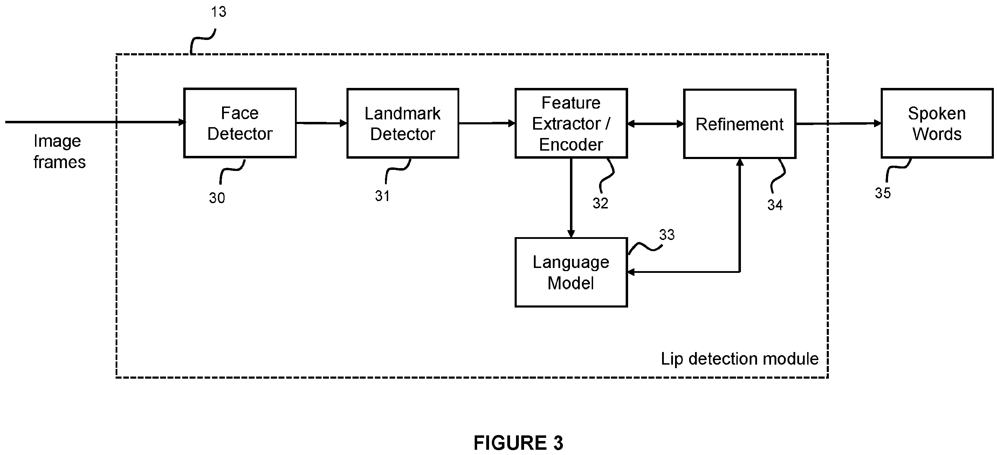

Based on the face frames, lip detection is performed by the lip detection module 13, described in more detail with reference to Figure 3. The lip detection module 13 may operate simultaneously on a plurality of different users. The lip detection module 13 comprises an image encoder 14 and a text decoder 15. The image encoder 14 identifies mouth and lip movements associated with a spoken input, such as a command, and uses these to identify language, including words or phrases that a user has likely used in order to cause the lip movements to be generated. The text decoder 15 translates language identified by a model used by the lip detection module 13 to text which can be output and passed to the text-to-image module 16.

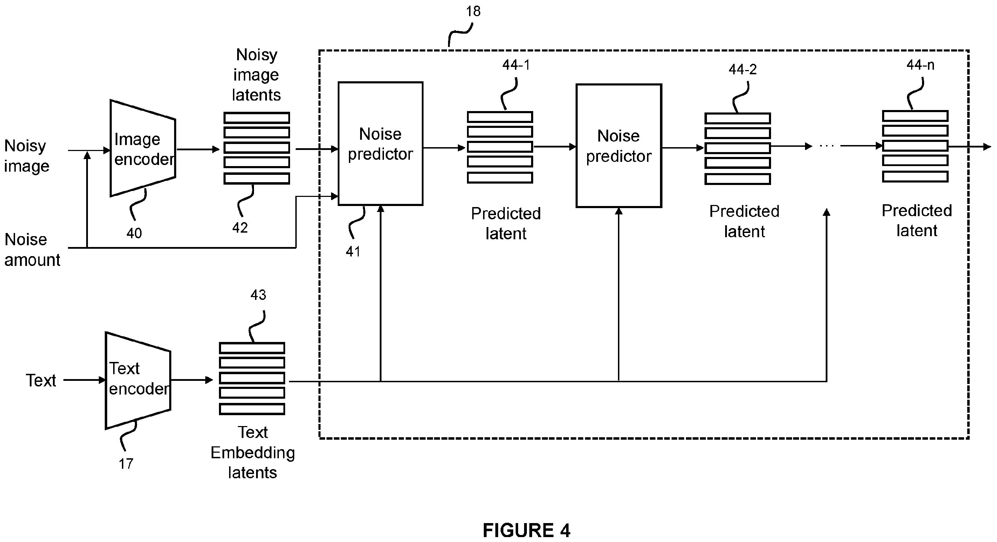

The text-to-image module 16 generates one or more images for output 20, taking the text from the output of the text decoder 15 as a prompt. The text-to-image module 16 comprises a text encoder 17, an image information creator 18 and an image decoder 19. The operation of the image information creator 18 is described in more detail with reference to Figure 4. Broadly, the text encoder 17 processes the text received from the text decoder 15 of the lip detection module 13 into a form which can be consumed by the image information creator 18 in order to generate information used to construct one or more output images 20. The output image(s) themselves are constructed by the image decoder 19 for output on a display.

The system 10 of the first embodiment intuitively provides informational visual images, responsive to a particular spoken input. The input source for the system 10 is not audio information captured by a microphone, as would be the case in some conventional voice-controlled systems, but image information associated with a driver or passenger's lip movements. As such, in a noisy environment, for example if vehicle windows are open, the radio is on, a user is able to convey particular commands or requests without difficulty, and the user is not required to unnaturally emphasise particular words or syllables to ensure that they are understood correctly. Further, the provision of visual information in response to a spoken input, rather than an audio output, is particularly beneficial for those with hearing loss.

Further, the generation of one or more images in response to a text input enables rich information to be provided to the user in response to a spoken input. A driver or passenger may be assisted with a particular task by the provision of detailed, specific information which is generated by the text-to-image module 16. As an example, instructions in the form of a message or label annotating an image of a vehicle part or component may enable a user to verify an operation to be performed on that vehicle part or component. For example, in response to the command "Decrease the angle of the right rearview mirror by 5 degrees", an intuitive image of the vehicle's right rearview mirror, with an indication of the intended angle reduction of 5 degrees, can be generated, which is easy for the user to verify and approve as action to be performed.

The use of a text-to-image module 16 is particularly advantageous in enabling a user to confirm, or provide some other response such as a follow-up command, or option selection, based on detailed information. An image provides an intuitive mechanism by which a user can understand how a spoken input has been interpreted by a system, and whether the suggested response or course of action is consistent with the user's wishes. If the user has spoken with their hand obscuring part of their mouth, for example, or with their head turned away from a camera such that lip detection is not optimal, the provision of a means to verify the operation of the lip detection module 13 is particularly useful to prevent an action being taken automatically that is against the user's wishes.

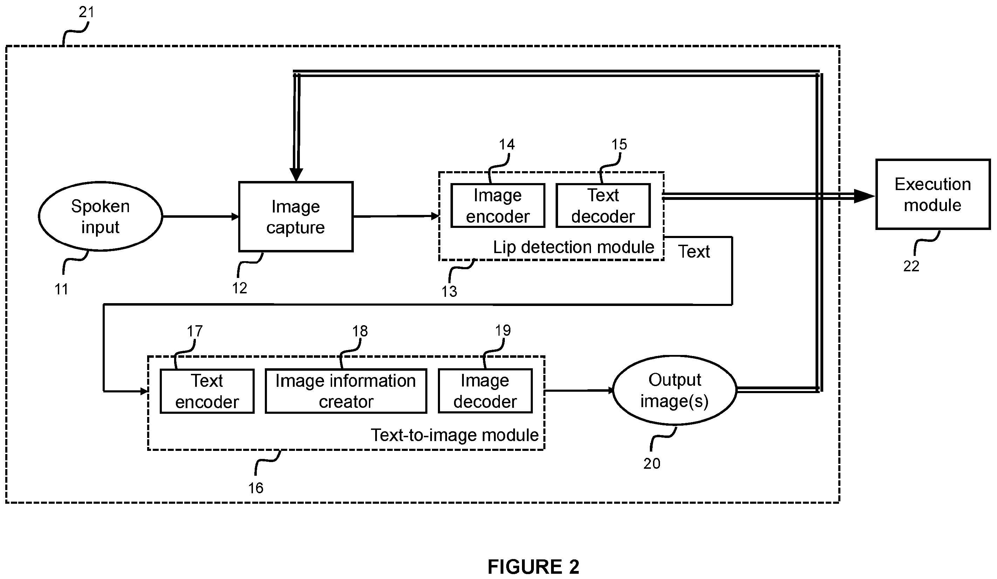

A feedback mechanism, enabling a user's confirmation of one or more assistance images, is described with reference to a second embodiment illustrated in Figure 2.

Figure 2 illustrates a system 21 for providing information to assist a user in response a spoken input, according to a second embodiment. The second embodiment has significant similarity to the first embodiment described with reference to Figure 1, and description of common components is omitted in the interests of conciseness.

In the second embodiment, the image capture module 12 acts to capture the response of a user to the output of one or more images on a display. The image capture module 12 operates in the same way as when capturing images of the interior of the vehicle to identify the original spoken input query, and provides image frames for input to the lip detection module 13, from which lip movements can be derived. The lip movements are expected to be associated with the user providing confirmatory spoken commands such as "yes", or "ok", which, if identified, cause the output of a command by an execution module 22 to the relevant vehicle controller, or causes the removal of displayed information from a display screen if the output of visual information itself satisfies the user's initial query. For example, if the user's query relates to provision of status information, the display of such status information may not require further action, but a user's acknowledgement provides useful verification to the system 20 that the lip detection module 13 and text-to-image module 16 have operated correctly.

If the lip detection module 13 identifies a negative response, the output image may be removed from the display, and the image capture module 12 captures images of the user to restart the process of identifying a spoken input.

In modifications of the second embodiment, it is possible to use an alternative mechanism for detecting the user's response, based on determination of head pose gestures such as nodding or head-shaking, instead of, or as well as using lip detection.

The second embodiment provides an intuitive technique of enabling verification and confirmation of information by a user, and in the case of verification and confirmation by a driver, the level of distraction from driving is reduced compared to a case in which information is provided in a less intuitive manner, such as a lengthy text format. The use of lip detection, or an alternative such as gesture detection, ensures that execution of a command, or a provision of a follow-up query, can be performed effectively, even in noisy environments.

Further, in embodiments, the confirmation of the user is fed back to the system 21 in order to improve the text-to-image module 16. For example, if an image is generated that is not responsive to the user's command, the text-to-image module 16 is trained so as not to generate the same image in the future.

Figure 3 shows the structure of the lip detection module 13 of the systems 10, 21 of Figures 1 and Figure 2, in the first and second embodiments. The lip detection module 13 operates on visual information from the imaging module 12 of the first and second embodiments, which comprises image frames representing the interior of a vehicle's cabin, and translates the visual input into text. Although the term lip detection module 13 is used in the present disclosure, in recognition of the specific detection of lip features performed by feature extractor 32, in modifications of the embodiments, mouth detection may be performed instead of, or in addition to, lip detection.

The image frames are received by a face detector 30 which performs image processing to identify regions of interest comprising faces of people in the vehicle. A landmark detector 31 interprets the regions of interest to identify facial landmarks, particularly lips. A feature extractor 32 identifies patterns of movement in the facial landmarks over a time-series of input frames in order to extract sequences of lip movements from the image frames. The feature extractor 32 encodes the extracted lip movements into a high-dimensional vector which can be input to a large language model (LLM) 33 in order to identify natural language terms which have the highest likelihood of corresponding to a spoken input that caused the lip movements.

The operation of the LLM 33 and the feature extractor 32 are refined by the use of a refinement module 34, which assesses performance against one or more metrics, and provides feedback to improve the performance in an iterative process. Such operation would be well understood by those of ordinary skill in the art, and any appropriate refinement process may be employed.

The output from the refinement module 34 comprises one or more spoken words 35 in the form of text to be passed to the text-to-image module 16. The text represents the natural language which expresses the user's spoken input, from which one or more responsive images can be generated.

The employment of LLM 33 assists with avoiding bias towards speech patterns of individual speakers, or particular ages or racial groups, that may exist in conventional speech detection systems employing classical machine learning techniques without the deep learning offered by artificial neural networks. As such, accuracy of the speech-to-text conversion process is improved, while the process is highly adaptable to different users. The LLM 33 uses determination of the semantic context of a user's spoken query or command, in order to improve the output which is suggested.

Figure 4 shows the structure of an image information creator 18 of the text-to-image module 16 used in the systems 10, 21 of the first and second embodiments of Figure 1 and Figure 2. The text-to-image module 16 is a generative artificial intelligence model that can generate high-resolution images from text inputs or prompts. In the present embodiments, the text-to-image module 16 is based on a diffusion model, such as Stable Diffusion. Diffusion models are based on a 'forward diffusion' process, in which noise is successively applied to training data to learn the evolution of the training data towards pure noise, and a learned 'reverse diffusion' process, in which the model denoises pure noise towards an output image. The learned denoising process is used in order to generate new data from pure noise, conditioned with a text input provided from the lip detection module 13, in a 'sampling' process.

In the present embodiments, the diffusion model is trained in latent space, which is a compressed, lower-dimensional space than image space, such that the training process can be performed more efficiently than if training were performed in image space. To achieve this, training data for the model is created by using an image encoder 40 to encode images into image embedding latents, while the text encoder 17 encodes text into text embedding latents 43. Matching pairs of images and captions are prepared, and the text encoder 17 and the image encoder 40 are jointly trained to predict correct pairings of training examples. Large volumes of matching images and captions are obtained from a corpus in a manner known in the art.

In more detail, the denoising process is performed by the successive application of a noise predictor 41 to a noisy image latent 42. The noise predictor removes predicted noise from the noisy image latent 42 to produce a first predicted latent 44-1. The noise predictor 41 operates on the first predicted latent 44-1 in the same manner to generate a further predicted latent 44-2. This process is performed a predetermined number of times, n, concluding with the output of predicted latent 44-n. In each step, the noise predictor 41 operates on an input latent and produces a predicted latent that better resembles an image to be output by the text-to-image module 16.

The noise predictor 41 is trained by selecting training image latents, to which a predetermined amount of noise is added, and predicting the amount of noise in the noisy image latent. The predetermined noise amount, and text embedding latents 43 from the text encoder 17 which match the image embedding latents from the image encoder 40, are also input to the noise predictor 41, which compares its prediction of the amount of noise with the predetermined amount of noise. Based on the result of the comparison, the noise predictor 41 is trained using backpropagation of the difference between the predicted noise and predetermined noise, so that it is better able to predict noise, and in this manner, a denoising process is learned.

As illustrated in Figures 1 and 2, the image information creator 18 receives a text input from the lip detection module 13, which has been encoded by the text encoder 17. The encoded text is used to condition a noisy image latent 42, comprising random noise, which is input to the noise predictor 41. The noise predictor 41 acts to predict noise in the noisy latent, and remove it to form a predicted latent. The noise predictor 41 acts in the same way on the predicted latent to produce a further predicted latent. The process is repeated a predetermined number of times, associated with a desired image quality to be output by the text-to-image module 16.

The latent which is output by the final noise prediction stage is input to the image decoder 19, which constructs a pixel image from the latent. The final pixel image is output for display.

In embodiments, the image decoder 19 of the text-to-image module 16 is the decoder of an autoencoder which is used to convert between pixel arrays in image space and information arrays in latent space, to facilitate the operation of the diffusion module by reducing the data storage and processing requirements as a result of the compression of the data. The encoder of the autoencoder is the image encoder which generates the training image latents for the noise predictor.

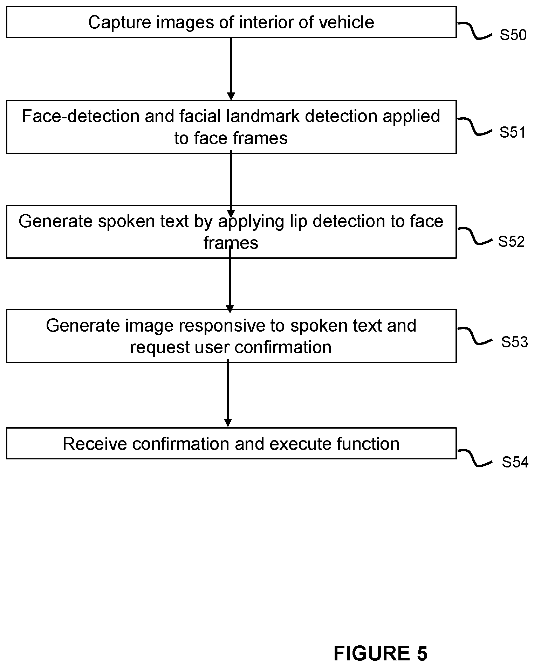

Figure 5 illustrates a method of providing information to assist a user in response to a spoken input, according to a third embodiment.

In step S50, an in-cabin monitoring system is used to capture images of the interior of the vehicle. The in-cabin monitoring system comprises one or more cameras, such as RGB-IR cameras.

In step S51, machine-learning-based face detection methods are used to identify the faces of people present in the car. The detection results are used to crop and generate face frames which are then passed to a machine learning (ML) based facial landmark detection method, and facial landmark points are obtained.

In step S52, the mouth landmark points are passed to an ML-based language model using lip detection to generate the detected words that the driver has spoken.

In step S53, the detected spoken words are encoded and passed to the vehicle's control unit. If the command of the driver matches one of the available commands in a command database, feedback is generated to request the driver's verification before activating the detected command. The driver's verification is requested by means of a message in a visual image which is generated based on the perceived command, displayed to the driver.

In step S54, the driver's face is observed. Following the displayed of the verification image, the driver can again use their lips to confirm or cancel the visualized command, or they can use head pose gestures such as nodding or shaking their head instead or as well as moving their lips. Such confirmation is used to determine whether or not to execute a command or function.

In modifications of the third embodiment, step S55 can be omitted, and confirmation from the user is not required in the case where the spoken input is a command to display status information, for example.

In further modifications, it is not necessary to determine that the command of a driver matches a command in the database of the vehicle's control system, and all commands are output. If a command database check is performed, however, a scenario in which an image is generated and displayed that relates to a restricted function which is not available in a particular vehicle or model type, such as opening a sunroof, or activating a heated seat, is prevented.

It will be understood that the embodiments illustrated above show an automotive application only for the purpose of illustration. In practice, embodiments may be applied to many different configurations, the detailed embodiments being straightforward for those skilled in the art to implement in view of the teaching set out in the present disclosure. Specific algorithms to be used for the lip detection module and text-to-image module may be selected dependent on at least available computing resources, camera resolutions, display sizes and resolutions for output of assistance images.

In embodiments, the generated visual content may be displayed at a different location dependent upon perceived context of lip movements. For example, when the lip detection module 13 outputs text indicative of a danger scenario, one or more of the generated images may be displayed on a peripheral device, such as a driver's watch, rather than on the display of a main in-cabin infotainment system. In embodiments, a context analyser (not shown) interprets the text output from the lip detection module 13 in order to assess whether a danger scenario is present, and may control the output display process accordingly.

The systems of the embodiments of the present disclosure are implemented on an embedded system with a hardware-accelerated machine learning inference engine, and camera system. The systems may connect to one or more of the vehicle's control systems. Embodiments of the present disclosure include an automotive system comprising one or more vehicle control units and one or more systems of the first and second embodiments.

The algorithms and neural networks which are described in relation to the lip detection module 13 and text-to-image module 16 are performed by the execution of machine-readable instructions by one or more processors of the embedded systems.

It will be appreciated that the embodiments described are not restricted to a specific hardware configuration for the embedded system.

## Claims

1. A system (21) for instructing execution of a function in response a spoken input (11), comprising:
one or more cameras (12) for capturing images of the user;
a lip-detection module (13) for processing the captured images to determine one or more words corresponding to lip movements of the user's spoken input;
a text-to-image generation module (16) for generating one or more images (20) representing a function responsive to the spoken input, based on the one or more words determined by the lip detection module; and
an output module for outputting the one or more generated images for display,
wherein the one or more cameras are arranged to capture the user's response to the displayed one or more images, and the system is arranged to instruct execution of the function in dependence upon the captured response.

2. A system according to claim 1, wherein the lip-detection module (13) is arranged to determine a context of the user's spoken input (11), and the output module is configured to display the generated images, or to instruct a peripheral device to display the one or more generated images, in dependence upon the determined context.

3. A system according to claim 1 or claim 2, wherein the lip-detection module (13) is arranged to:
process the captured images to identify a face frame for each of one or more faces in the captured images;
process each face frame to identify facial landmarks;
process the facial landmarks to identify lip movements; and
use a large language model to identify one or more words associated with the identified lip movements.

4. A system according to any one of the preceding claims, wherein the one or more cameras (12) are arranged to detect at least one of body movements, body positions and lip movements to determine the response.

5. A system according to any one of the preceding claims, wherein the text-to-image generation module (16) is arranged to be trained by the user's response.

6. A system according to any one of the preceding claims, wherein the text-to-image generation module (16) comprises a diffusion model comprising:
a text encoder (17) for encoding text into a text embedding;
an image information creator (18) for creating an information array in latent space; and
an image decoder (19) for generating a pixel image from the information array output by the image information creator;
wherein the image information creator comprises a noise predictor (41) arranged to predict noise in a noisy latent image, the image information creator arranged to subtract the predicted noise from the noisy latent image to generate a denoised latent image;
wherein the information array in latent space is created by applying a predetermined plurality of denoising steps to an input latent image comprising noise, a noise amount, and the text embedding of one or more words output by the lip detection module.

7. A system according to claim 6, wherein the diffusion model further comprises an image encoder (40) for generating an image embedding from an input image, wherein the text encoder (17) and image encoder are trained using pairs of training images and training captions to produce pairings of embeddings.

8. A system according to claim 7, wherein the noise predictor (41) is trained by:
adding predetermined noise to a training image to form a noisy training image;
inputting the noisy training image to the noise predictor (41);
using the noise predictor to predict the noise in the noisy training image;
comparing the predicted noise with the predetermined noise; and
training the noise predictor using backpropagation of the difference between the predicted noise and predetermined noise.

9. A system according to any one of claims 6 to 8 comprising an autoencoder having an encoder for compressing an image from pixel space into latent space, and a decoder for decoding an image from latent space into pixel space,
wherein the image decoder (19) comprises the decoder of the autoencoder; and
wherein the encoder of the autoencoder generates training image data in latent space for training the noise predictor (41).

10. An automotive system comprising one or more vehicle control units, and the system of any one of the preceding claims, wherein the system is arranged to provide driver assistance, and the one or more cameras (12) are arranged to capture images of the cabin of the vehicle.

11. A method of instructing execution of a function in response a spoken input (11), comprising:
capturing (S50) images of the user;
processing (S51, S52) the captured images to determine one or more words corresponding to lip movements of the user's spoken input;
generating (53) one or more images (20) representing a function responsive to the spoken input, based on the determined one or more words; and
displaying the one or more generated images;
capturing (S54) the user's response to the displayed one or more images; and
instructing execution of the function in dependence upon the captured response.

12. A computer program containing computer-executable instructions which, when executed by one or more processors of a system further comprising one or more cameras, is arranged to cause the method of claim 11 to be performed.

## Patentansprüche

1. System (21) zum Anweisen einer Ausführung einer Funktion als Reaktion auf eine gesprochene Ausgabe (11), umfassend:
eine oder mehrere Kameras (12) zum Aufnehmen von Bildern des Benutzers;
ein Lippen-Erkennungsmodul (13) zum Verarbeiten der erfassten Bilder, um ein oder mehrere den Lippenbewegungen der gesprochenen Benutzereingabe entsprechende Wörter zu bestimmen;
ein Text-zu-Bild-Erzeugungsmodul (16) zum Erzeugen eines oder mehrerer Bilder (20), die eine auf die gesprochene Eingabe reagierende Funktion darstellen, basierend auf dem einen oder den mehreren Wörtern, die durch das Lippen-Erkennungsmodul bestimmt werden; und
ein Ausgabe-Modul für das Ausgeben des einen oder der mehreren erzeugten Bilder zur Anzeige,
wobei die eine oder mehreren Kameras so angeordnet sind, dass sie die Reaktion des Benutzers auf das eine oder die mehreren angezeigten Bilder erfassen, und wobei das System so angeordnet ist, dass es die Ausführung der Funktion abhängig von der erfassten Reaktion veranlasst.

2. System nach Anspruch 1, wobei das Lippen-Erkennungsmodul (13) so angeordnet ist, dass es einen Kontext der gesprochenen Benutzereingabe (11) bestimmt, und wobei das Ausgabemodul so konfiguriert ist, dass es die erzeugten Bilder anzeigt, oder ein Peripheriegerät veranlasst, das eine oder die mehreren erzeugten Bilder, abhängig von dem bestimmten Kontext, anzuzeigen.

3. System nach Anspruch 1 oder Anspruch 2, wobei das Lippen-Erkennungsmodul (13) für Folgendes angeordnet ist:
Verarbeiten der erfassten Bilder, um einen Gesichtsrahmen für jedes des einen oder der mehreren Gesichter in den erfassten Bildern zu identifizieren;
Verarbeiten jedes Gesichtsrahmens, um Gesichtsmerkmale zu identifizieren;
Verarbeiten der Gesichtsmerkmale, um Lippenbewegungen zu identifizieren; und
Verwenden eines großen Sprachmodells, um ein oder mehrere Wörter zu identifizieren, die mit den identifizierten Lippenbewegungen verbunden sind.

4. System nach einem der vorstehenden Ansprüche, wobei die eine oder die mehreren Kameras (12) so angeordnet sind, dass sie mindestens eines aus Körperbewegungen, Körperpositionen und Lippenbewegungen erfassen, um die Reaktion zu bestimmen.

5. System nach einem der vorstehenden Ansprüche, wobei das Text-zu-Bild-Erzeugungsmodul (16) so angeordnet ist, dass es durch die Benutzerreaktion trainiert wird.

6. System nach einem der vorstehenden Ansprüche, wobei das Text-zu-Bild-Erzeugungsmodul (16) ein Diffusionsmodell umfasst, umfassend:
einen Text-Encoder (17) zum Codieren von Text in ein Text-Embedding;
einen Bildinformations-Generator (18) zum Erzeugen eines Informationsarrays im latenten Raum; und
einen Bild-Decoder (19) zum Erzeugen eines Pixel-Bildes aus der Informationsarray-Ausgabe durch den Bildinformations-Generator;
wobei der Bildinformations-Generator einen Rausch-Prädiktor (41) umfasst, der so angeordnet ist, dass er das Rauschen auf einem verrauschten latenten Bild vorhersagt, wobei der Bildinformations-Generator so angeordnet ist, dass er das vorhergesagte Rauschen von dem verrauschten latenten Bild subtrahiert, um ein nicht verrauschtes latentes Bild zu erzeugen;
wobei das Informationsarray im latenten Raum durch Anwenden einer vorbestimmten Vielzahl von Entrauschungsschritten auf ein Eingabe-Latenzbild erzeugt wird, das ein Rauschen, einen Rauschanteil und das Text-Embedding eines oder mehrerer von dem Lippen-Erkennungsmodul ausgegebenen Wörtern umfasst.

7. System nach Anspruch 6, wobei das Diffusionsmodell ferner einen Bild-Encoder (40) zum Erzeugen eines Bild-Embeddings aus einem Eingabebild umfasst, wobei der Text-Encoder (17) und der Bild-Encoder unter Verwendung von Paaren aus Trainingsbildern und Trainingsbeschriftungen trainiert werden, um Paarungen von Embeddings zu erzeugen.

8. System nach Anspruch 7, wobei der Rausch-Prädiktor (41) geschult wird durch:
Hinzufügen eines vorbestimmten Rauschens zu einem Traininigsbild, um ein verrauschtes Trainingsbild zu bilden;
Eingeben des verrauschten Trainingsbildes in den Rausch-Prädiktor (41);
unter Verwendung des Rausch-Prädiktors, um das Rauschen in dem verrauschten Trainingsbild vorherzusagen;
Vergleichen des vorhergesagten Rauschens mit dem vorbestimmten Rauschen; und
Trainieren des Rausch-Prädiktors unter Verwendung einer Rückwärtspropagierung der Differenz zwischen dem vorhergesagten Rauschen und dem vorbestimmten Rauschen.

9. System nach einem der Ansprüche 6 bis 8, umfassend einen Autoencoder mit einem Encoder zum Komprimieren eines Bildes vom Pixelraum in den latenten Raum und einen Decoder zum Decodieren eines Bildes aus einem latenten Raum in einen Pixelraum,
wobei der Bild-Decoder (19) den Decoder des Autoencoders umfasst; und
wobei der Encoder des Autoencoders Trainingsbilddaten im latenten Raum erzeugt, um den Rausch-Prädiktor (41) zu trainieren.

10. Automobilsystem, umfassend eine oder mehrere Fahrzeugsteuereinheiten und das System nach einem der vorstehenden Ansprüche, wobei das System so angeordnet ist, dass es eine Fahrerassistenz bereitstellt, und wobei die eine oder mehreren Kameras (12) so angeordnet sind, dass sie Bilder des Fahrzeuginnenraums erfassen.

11. Verfahren zum Anweisen einer Ausführung einer Funktion als Reaktion auf eine gesprochene Ausgabe (11), umfassend:
Erfassen (S50) von Bildern des Benutzers;
Verarbeiten (S51, S52) der erfassten Bilder, um ein oder mehrere Wörter zu bestimmen, die Lippenbewegungen der gesprochenen Benutzereingabe entsprechen;
Erzeugen (53) eines oder mehrerer Bilder (20), die eine Funktion repräsentieren als Reaktion auf die gesprochene Eingabe, basierend auf dem bestimmten einen oder den mehreren Wörtern; und
Anzeigen des einen oder der mehreren erzeugten Bilder;
Erfassen (S54) der Reaktion des Benutzers auf das angezeigte eine oder die mehreren Bilder; und
Anweisen der Ausführung der Funktion abhängig von der erfassten Reaktion.

12. Computerprogramm, das computer-ausführbare Anweisungen enthält und, wenn es von einem oder mehreren Prozessoren eines Systems ausgeführt wird, das ferner eine oder mehrere Kameras umfasst, das so angeordnet ist, dass es das Ausführen des Verfahrens nach Anspruch 11 veranlasst.

## Revendications

1. Système (21) destiné à donner instruction d'exécuter d'une fonction en réponse à une entrée vocale (11), comprenant :
une ou plusieurs caméras (12) destinées à capturer des images de l'utilisateur ;
un module de détection des lèvres (13) destiné à traiter les images capturées afin de déterminer un ou plusieurs mots correspondant aux mouvements des lèvres de l'entrée vocale de l'utilisateur ;
un module de génération d'image à partir de texte (16) destiné à générer une ou plusieurs images (20) représentant une fonction sensible à l'entrée vocale, sur la base du ou des mots déterminés par le module de détection des lèvres ; et
un module de sortie destiné à produire la ou les images générées pour l'affichage,
dans lequel la ou les caméras sont agencées de manière à capturer la réponse de l'utilisateur à la ou aux images affichées, et le système est agencé de manière à donner instruction d'exécuter la fonction dépendant de la réponse capturée.

2. Système selon la revendication 1, dans lequel le module de détection de lèvres (13) est agencé de manière à déterminer un contexte de l'entrée vocale de l'utilisateur (11), et le module de sortie est conçu pour afficher les images générées, ou pour donner instruction à un dispositif périphérique d'afficher la ou les images générées dépendant du contexte déterminé.

3. Système selon la revendication 1 ou la revendication 2, dans lequel le module de détection de lèvres (13) est agencé de manière à :
traiter les images capturées pour identifier un cadre de visage pour chacun du ou de plusieurs visages dans les images capturées ;
traiter chaque cadre de visage pour identifier les repères faciaux ;
traiter les repères faciaux pour identifier les mouvements des lèvres ; et
utiliser un grand modèle de langage pour identifier un ou plusieurs mots associés aux mouvements des lèvres identifiés.

4. Système selon l'une quelconque des revendications précédentes, dans lequel la ou les caméras (12) sont agencées de manière à détecter au moins les mouvements du corps et/ou les positions du corps et/ou les mouvements des lèvres afin de déterminer la réponse.

5. Système selon l'une quelconque des revendications précédentes, dans lequel le module de génération d'image à partir de texte (16) est agencé de manière à être entraîné par la réponse de l'utilisateur.

6. Système selon l'une quelconque des revendications précédentes, dans lequel le module de génération d'image à partir de texte (16) comprend un modèle de diffusion comprenant :
un encodeur de texte (17) destiné à encoder du texte dans une insertion de texte ;
un créateur d'informations d'image (18) destiné à créer un réseau d'informations dans un espace latent ; et
un décodeur d'image (19) destiné à générer une image de pixel à partir du réseau d'informations produit en sortie par le créateur d'informations d'image ;
dans lequel le créateur d'informations d'image comprend un prédicteur de bruit (41) agencé de manière à prédire le bruit dans une image latente bruitée, le créateur d'informations d'image agencé de manière à soustraire le bruit prédit à partir de l'image latente bruitée afin de générer une image latente débruitée.
dans lequel le réseau d'informations dans l'espace latent est créé par application d'une pluralité prédéfinie d'étapes de débruitage à une image latente d'entrée comprenant du bruit, une quantité de bruit, et l'insertion de texte d'un ou plusieurs mots produits en sortie par le module de détection des lèvres.

7. Système selon la revendication 6, dans lequel le modèle de diffusion comprend en outre un encodeur d'image (40) destiné à générer une insertion d'image à partir d'une image d'entrée, dans lequel l'encodeur de texte (17) et l'encodeur d'image sont formés à l'aide des paires d'images d'apprentissage et de légendes d'apprentissage pour produire des appariements d'insertion.

8. Système selon la revendication 7, dans lequel le prédicteur de bruit (41) est entraîné par :
l'ajout d'un bruit prédéfini à une image d'apprentissage pour former une image d'apprentissage bruyante ;
l'entrée de l'image d'apprentissage bruitée dans le prédicteur de bruit (41) ;
l'utilisation du prédicteur de bruit pour prédire le bruit dans l'image d'apprentissage bruyante ;
la comparaison du bruit prédit avec le bruit prédéfini ;
et
l'apprentissage du prédicteur de bruit à l'aide de la rétropropagation de la différence entre le bruit prédit et le bruit prédéfini.

9. Système selon l'une quelconque des revendications 6 à 8, comprenant un autoencodeur présentant un encodeur destiné à comprimer une image à partir de l'espace de pixels dans l'espace latent, et un décodeur destiné à décoder une image de l'espace latent dans l'espace de pixels.
dans lequel le décodeur d'image (19) comprend le décodeur de l'autoencodeur ; et
dans lequel l'encodeur de l'autoencodeur génère des données d'image d'apprentissage dans l'espace latent destinées à l'apprentissage du prédicteur de bruit (41).

10. Système automobile comprenant une ou plusieurs unités de commande de véhicule, et le système selon l'une quelconque des revendications précédentes, dans lequel le système est agencé de manière à fournir une assistance au conducteur, et la ou les caméras (12) sont agencées de manière à capturer des images de l'habitacle du véhicule.

11. Procédé donnant instruction d'exécuter une fonction en réponse à une entrée vocale (11), comprenant :
la capture (S50) des images de l'utilisateur ;
le traitement (S51, S52) des images capturées afin de déterminer un ou plusieurs mots correspondant aux mouvements des lèvres de l'entrée vocale de l'utilisateur ;
la génération (53) d'une ou plusieurs images (20) représentant une fonction sensible à l'entrée vocale, sur la base du ou des mots déterminés ; et
l'affichage de la ou des images générées ;
la capture (S54) de la réponse de l'utilisateur à la ou aux images affichées ; et
l'instruction de l'exécution de la fonction dépendant de la réponse capturée.

12. Programme informatique contenant des instructions exécutables par un ordinateur qui, lorsqu'elles sont exécutées par un ou plusieurs processeurs d'un système comprenant en outre une ou plusieurs caméras, est agencé de manière à amener la réalisation du procédé selon la revendication 11.
